# EUROPEAN PATENT APPLICATION

(11) **EP 3 628 551 A1**
(43) Date of publication of application: **01.04.2020**
(21) Application number: 19208381.4
(22) Date of filing: 26.12.2012
(51) Int. Cl.: B60S 1/46, B60S 1/48

(54) **ADAPTIVE, MULTI-MODE WASHER SYSTEM**

(30) Priority: 23.02.2012 US 201261602177 P
(62) Divisional of application: 12869363.7
(71) Applicant: dlhBOWLES, Inc., Canton OH 44706 (US)
(72) Inventor: KOEHLER, Eric, Woodstock, MD 21163 (US); MARSDEN, Thomas, Eldersburg, MD 21784 (US); SRIDHARA, Srinivasaiah, Ellicott City, MD 21042 (US); GOPALAN, Sridhar, Westminster, MD 21157 (US); BERNING, Keith, Jessup, MD 20794 (US); Romack, Alan Scot, Columbia, MD 21045 (US)
(74) Representative: Stiel, Jürgen

(57) **Abstract**

An adaptive vehicle surface wash system configured for use in a vehicle operating at selected vehicle speeds in an ambient environment, comprising:
a wash control system configured to respond to a user's wash system actuation input and to receive a vehicle speed signal from a vehicle speed sensor, said control system also being configured to receive a vehicle environment temperature signal from a temperature sensor, wherein said wash control system is configured or programmed to generate a wash mode signal in response to at least one of said vehicle speed signal and said temperature signal to adapt the wash system's operation to sensed operating conditions.

## Description

### BACKGROUND OF THE INVENTION

### Related Application Information

This application is related and claims priority to (a) US Provisional Application No. 61538618, filed September 23, 2011, and entitled "Two Mode Washer System and Control Method", and (b) US Provisional Application No. 61602177, filed February 23, 2012, and entitled "High Performance Multi-mode Washer System and Control Method", the entire disclosures of which are incorporated herein by reference.

### Field of the Invention:

The present invention relates, in general, to vehicle washer systems, spray nozzles and methods for creating desired patterns of sprays, and more particularly to a speed and temperature sensitive vehicle windshield, rear glass, headlamp or camera cleaning system utilizing two-mode spray nozzles with fluidic devices having selectable flow rates to control spray patterns at selected spray nozzle outlets.

### Discussion of the Prior Art:

The optimal cleaning of a vehicle's windshield at a static airspeed condition relies on a gentle, full coverage spray to effect cleaning over the majority of a designated wipe pattern, extending from the toe to the heel of the pattern. This optimal spray can be accomplished with either single or double fan spray nozzles that target and concentrate fluid in the appropriate regions of the windshield, with the fluid working in concert with the wipers to complete the coverage and cleaning action. It is desirable to keep the spray localized on the glass, particularly in the wipe zone, in order to produce excellent coverage in the critical area (or "C" zone) of the windshield. It is highly un-desirable to have any fluid over-spray the surrounding "A" pillars or roof line of the vehicle.

Shear type nozzles or bug-eye type nozzles have been used in the past, but it has been found that they achieve less comprehensive (and less effective) spray patterns. Furthermore, optimal spray conditions are compromised as temperature decreases or as vehicle or air speed increases. With decreasing temperature, the fluid used to clean the windshield becomes more viscous, and as a result the pressure delivered to the nozzle, which ejects the fluid toward the windshield, decreases. For example, at 0°C Methanol in a 50/50 concentration has a viscosity of 7 cP (0 at RT) and Ethanol mixed at 50/50 concentration has a viscosity of nearly 27 cP, and none of the many nozzle technologies that currently exist (e.g., bug-eye, spoon/shear and fluidic) can fully compensate for the loss of velocity that is a result of loss of pressure due to such viscosity changes. This loss of pressure can result in sprays that sag under the influence of gravity and hit lower on the windshield than would occur under the designed room temperature situation. Since the pressure required to maintain the desired spray pattern goes up as temperature goes down, the system designer is forced to specify a higher nozzle pressure at room temperature than is optimally desired, in order to assure adequate performance at the cold temperatures.

Even more apparent is the effect that air speed has on spray depression. As the vehicle moves through space, the air traveling relative to the vehicle is, in effect, moving toward the car at roughly the same speed as the vehicle is moving forward, even when taking into account ambient wind direction and speed. Although there are regions of decreasing air speed, with constant vehicle speed, that are initiated due to vehicle geometry and the growth of a boundary layer on the vehicle skin, it is likely that the nozzle will be situated somewhere on the vehicle generally outside of this slower air speed region for a number of reasons. These reasons include such factors as (a) where the nozzle can be placed physically on the car, such as the hood upper region, the cowl, or the hood lower region, (b) clearance with respect to the windshield wipers, or (c) obstructions underhood that would interfere with the nozzle placement.

Since the nozzle spray pattern will likely be subjected to air speeds near the vehicle forward motion speed, the effect of higher (e.g., 100 mph) air speeds on the flight trajectory of the spray pattern must be considered. Higher air speeds tend to collapse the outward expansion of a fluid spray fan as the influence of the air speed, pointing directly at the windshield of the vehicle, overcomes any cross car velocity vectors. This, in effect, rapidly narrows the fan angle and the cross car velocity vector of the spray soon after the fluid leaves the nozzle. Additionally, any upward angle of the spray that the nozzle mounting location and nozzle geometry impart on the spray pattern are likewise quickly eliminated by high velocity air, which depresses the spray down the windshield glass. It will be evident that combining the effects of cold ambient temperatures, as discussed above, with the effects of high air speeds worsens the problem of effective cleaning of a windshield, as well as other areas of the vehicle that are to be cleaned by a targeted fluid spray.

Vehicle windshield cleaning performance is addressed in US and other national safety specifications and so is of particular concern to OEMs; accordingly, there must be adequate cleaning of certain regions of the windshield at high vehicle speeds. As a result, washer system suppliers must make room temperature, low vehicle airspeed compromises to assure that cold, high speed cleaning is achieved. This is typically accomplished by aiming the fan nozzle spray higher and wider than desired at the room temperature (RT) condition and pushing up the pressure delivered to the nozzle to raise the initial exit velocity of the fluid to boost the spray's ability to resist the air speed and cold temperature influences for a longer period of flight time. The end result is that at low vehicle speeds, the spray pattern is much higher and wider than desired, wasting fluid by over spraying the "A" pillars and roof lines of the vehicle. Additionally, more cleaning fluid is consumed than is really necessary, as a result of the increased pressure. Other prior art systems (e.g., US Patent 4768716, to Buchanan et al) attempt to solve the problem by varying the pressure produced by the washer pump, as by raising or lowering the voltage to vary the pump output. Other prior art systems adjust the inclination or aim of the washing spray by electro-mechanical devices (e.g., US Patent 4520961, to Hueber).

Another popular method of overcoming the above-described problems is to produce a nozzle with straight stream or bug eye characteristics. These nozzles do not distribute the spray at all, but send it in a single beam of liquid at the target. This results in a relatively high velocity stream spray that is fairly good at resisting the effects of air speed. Unfortunately, straight-stream sprays provide poor cleaning characteristics as compared to wide distribution sprays mentioned earlier, as the straight stream nozzles tend to direct fluid at highly localized areas of the windshield and require multiple wiper passes to distribute the fluid. Single stream sprays also lack the pre-wetting advantage of fan sprays. Bug-eye style and high pressure distributed sprays can impact the windshield quite sharply, and as a result, ricochet off the windshield under static conditions, wasting fluid.
US 6,402,052 B discloses a plural mode washer system for vehicles, with a washer fluid pump having selectable low pressure and a high pressure output fluid flows; and at least one fluidic nozzle connectable to said pump to provide a selectable low or high pressure fluid spray output.
US 2003/0075207 discloses a washer system comprising a pump with a reversible impeller. DE 195 37 790 A discloses a washer system comprising a vehicle speed sensor.
JP 2004 314792 A discloses a dual outlet pump having a first low pressure outlet and a second high pressure outlet, and further including a check valve connected to said first and second outlets and responsive to the pressure produced by said reversible impeller to produce a fluid flow at only the selected high or low pressure fluid outlet from said pump, and a controller for said pump for selecting the direction of spin to provide a corresponding low pressure or high pressure output from said nozzle, and a detector for switching the pressure output in response to a detected condition.
FR 2 734 534 A1 discloses an adaptive vehicle surface wash system configured for use in a vehicle operating at selected vehicle speeds in an ambient environment, comprising:
a wash control system configured to respond to a user's wash system actuation input and to receive a vehicle speed signal from a vehicle speed sensor, said control system also being configured to receive a vehicle environment temperature signal from a temperature sensor,
wherein said wash control system is configured or programmed to generate a wash mode signal in response to at least one of said vehicle speed signal and said temperature signal to adapt the wash system's operation to sensed operating conditions;
a washer fluid pump having selectable low pressure mode corresponding to a low pressure fluid flow and a high pressure mode corresponding to a high pressure fluid flow, and wherein said washer fluid pump is configured to receive said wash mode signal; and at least one washing nozzle aimed at a selected vehicle surface,
said washing nozzle being in fluid communication with said pump to provide a selectable low or high pressure fluid spray output from said washing nozzle, wherein said fluid spray output is aimed by said nozzle to impact said selected surface at a pre-defined impact angle selected for said wash mode signal.

A highly desirable situation to a washer system designer would be to have two or more separate cleaning systems on every vehicle. This would allow the designer to tailor one system to the low vehicle speed condition ("Normal") and another to the high vehicle speed condition ("Boost"). Unfortunately, this is not practical due to many reasons including: component cost, system complexity, and vehicle packaging space.

There is a need, therefore, for a more effective and economical system and method for overcoming problems in cleaning vehicle windshields and other areas arising from changes in vehicle speed and washer fluid temperature and viscosity. The present invention is directed to a system with features for minimizing the problems described above in novel ways, while still achieving the dual system ideal.

### OBJECTS AND SUMMARY OF THE INVENTION

Accordingly, it is an object of the present invention to overcome the above mentioned difficulties by providing an effective and economical adaptive system and method for overcoming problems arising from changes in vehicle speed and washer fluid temperature and viscosity.

It is another object of the invention to provide a speed, temperature or cleaning surface sensitive system for cleaning windshield, rear glass, or camera lenses on vehicles wherein the output pressure of a fluid system pump is controlled in response to speed or temperature changes to regulate fluid flow to match the conditions at the time of the cleaning request.

In accordance with the present invention, a two mode washer system and control method provide an enhanced ability to maintain windshield washer cleaning performance at varying vehicle speeds and at varying temperatures. Each of the herein described embodiments is readily adapted for washer systems with hood mounted, cowl mounted or underhood mounted nozzles. The nozzles preferably aim and generate spray patterns of uniformly distributed fluid and incorporate fluidic circuits or fluidic oscillators such as those described in commonly owned US patents 5,749,525, 5,906,317, 6,457,658, 7,014,131, 7,472,848 and 7,775,456, the entire disclosures of which are hereby incorporated herein by reference.

Briefly, in a first embodiment of the invention, the two-mode system is provided with a washer fluid driving pump having an impeller that is activated to supply fluid under pressure to a suitable nozzle. Selectable first, or low pressure, and second, or high pressure, modes are provided by controlling the impeller spin direction. This control is accomplished, not by varying the voltage thru a range of values as in prior art devices, but by switching the polarity of the power supply to cause a pump's impeller to spin either forward or backwards. Because of the design of such pumps, the output pressure is high or boosted when the impeller spins in a forward direction and low when it spins in a backwards direction. The advantage of this pump is that there is no need for complicated variable resistance, and therefore variable voltage, control circuitry or pulse width modulated control systems. An advantage of the system of the present invention is that most vehicle manufacturers have an existing vehicle architecture currently used in dual outlet pump applications to control the activation of a front (e.g., windshield) cleaning system or a rear (e.g., backlight) cleaning system, that can be adapted readily for this system.

The present system may utilize single outlet or dual outlet centrifugal pumps which produce different pressure and flow curves when spun in the intended forward direction vs. the reverse direction. This effect is mainly due to the location of the pumping chamber outlet relative to the vane tip and the wet cut. For the purposes of this disclosure, "pump" references and nomenclature refer to centrifugal-type pumps driven by DC electric motors, as typically employed in automotive washer systems.

High end symmetric impeller pumps typically have a forward spin dead head pressure of approximately 55 PSI. When spun in reverse, such pumps have a dead head pressure of about 40 PSI, a reduction of performance of around 27%. Flow rate reductions are not available as it is a dead head condition defined by no flow. Pressure rapidly falls off on these pumps, getting as high as 80% reduction in performance and very large losses of flow rate. The forward direction on these pumps can produce nearly 5500 ml/min of flow at 0 PSI, while the rearward direction will produce just over 2100 ml/min at the same 0 PSI. In addition, high end asymmetric impeller pumps typically have a forward spin dead head pressure of around 55 PSI and a reverse spin dead head pressure of about 41 PSI, much like the symmetric impeller pump. The major difference lies in the falloff curve, for the asymmetric impeller pump falls off much more slowly than the symmetric. Pressure reduction percentages are only near 60%. Flow decay is even less, with a forward maximum flow rate of nearly 7000 mL/min and a reverse maximum flow rate of 4200 mL/min.

In accordance with the method and system of present invention, the electrical system in a vehicle in which the present system is to be installed is set up to provide selectively reversible pump polarity and thus selectable reverse operation and forward operation of a washer fluid pump, and thus a two-mode system is provided. In an exemplary embodiment, a two mode pump is initially operated in the second mode, or reverse direction, producing a lower amount of pressure. The rest of the cleaning system is set up, and the nozzles are oriented, to produce the best static (near zero mph) coverage possible. Then, as vehicle speed increases to a high speed condition, the vehicle's controlling electronics respond to the speed change to selectively activate the pump in the first mode, or forward direction, giving the system an added pressure boost for dynamic operation conditions. Also, as vehicle environment ambient temperature and fluid temperature decreases, the vehicle's controlling electronics respond to selectively switch the pump the first mode, or forward direction, giving the system an added pressure boost for dynamic or cold operation conditions.

The speed or temperature adaptive wash system of the present invention thus allows a vehicle control system to adapt a windshield or other cleaning system to the operating conditions. This is accomplished by enabling the pressure in the cleaning system to be controlled by polarity switching, not by scaling, so that pump output is varied by changing the polarity of the power supplied to the pump, not by varying the voltage supplied to the pump. This is effected thru the inherent nature of this style of pump, which performs differently when spun in the normal design direction (forward) vs the backwards direction and is most simply embodied in a single outlet pump assembly. An advantage of this type of operation is that the washer spray nozzles can be aimed higher than in prior systems, to take advantage of the lower pressure delivery in the reverse direction and to allow control over undesirable washer system performance characteristics like over spray. This saves washer fluid by operating at lower pressures, and by only using high pressure, high consumption on demand.

The foregoing use of polarity switching to control pressure leads to further embodiments of the present invention which utilize dual outlet pumps. A symmetric dual outlet pump would generate the same pressure when spinning either the forward or reverse direction, so polarity switching would not change outlet pressure, just delivery location. However, an asymmetric dual outlet pump provides different pressures in the forward and reverse directions due to its design and can therefore be used to control the pressure of fluid delivered to a washing or cleaning system. While dual outlet pump controls currently exist, using polarity switching, the termination of those separate outlets in the prior art almost invariably leads to different locations on a vehicle, like the windshield and the back glass. In the pump assembly of present invention, on the other hand, the pressure difference created by different polarities is used to change the pump output pressure, and to direct the flow to a single cleaning location, such as the windshield, either via a single nozzle or a combination of nozzles. In accordance with a further aspect of the invention, multiple nozzles may be aimed differently to take advantage of the pressure differences.

The present invention makes possible other embodiments which are variations on the foregoing systems and devices, wherein combinations of single and dual outlet asymmetric pumps are used as building blocks to higher functionality systems. For example, a system can be constructed that incorporates two pumps in series, the system having a first mode in which pump 1 is activated and pump 2 is free-wheeling to deliver fluid with a single normal high pressure, and a second mode, which is a super boost mode, where both pumps are activated to nearly double the pressure. By adding polarity switching, this system can achieve four (4) separate modes or pressure regions of operation (P1 Reverse & P2 Free-wheeling, P1 Forward & P2 Free-Wheeling, P1 Reverse & P2 Reverse, and P1 Forward and P2 Forward). A similar arrangement can be used to deliver fluid to multiple washer spray nozzle locations with multiple pressures.

In a further embodiment, the foregoing pressure controlled systems can be combined with different sets of nozzles, with selected nozzles being aimed to take advantage of low or high pressure modes of operation. These nozzles may be physically separate nozzles or nozzles combined in a common housing, the key being a plurality of distinct inlets and an equal number of distinct outlets.

### Brief Description of the Drawings

The foregoing, and still further objects, features and advantages of the present invention will become apparent upon consideration of the following detailed description of preferred embodiments thereof, particularly when taken in conjunction with the accompanying drawings, wherein like reference numerals in the various figures are utilized to designate like components, and wherein:
Fig. 1 is a chart comparing the forward and reverse outputs of symmetric and asymmetric impeller pumps of the type used in the present invention;
Fig. 2A diagrammatically illustrates a reversible pump system for a windshield washer selectively providing high or low pressure fluid to fluidic nozzles;
Figs. 2B and 2C illustrate exemplary spray patterns achievable on a selected vehicle surface such as an automotive windshield using embodiments of the washer system of Fig 2A;
Fig. 2D illustrates an exemplary reversible asymmetric pump housing and impeller as configured for use in the washer system of Fig 2A;
Fig. 3 is a flow chart illustrating a method of selecting forward or reverse flow in the pump system of Figs. 2A-2D;
Fig. 4 is a chart illustrating output flow from a dual outlet asymmetric pump operating in the forward direction;
Fig. 5 is a chart illustrating output flow from a dual outlet asymmetric pump operating in the reverse direction;
Fig. 6A illustrates a dual outlet asymmetric pump system for a windshield washer supplying a single fluidic nozzle and a dual fluidic nozzle in accordance with one embodiment of the present invention;
Fig. 6B illustrates a dual outlet pump and valve assembly usable in the system of Fig. 6A, wherein a shuttle check valve is connected to the pump outlets to direct fluid from the pump to a single selected output for either the low mode or high (boosted) mode of operation;
Fig. 7 illustrates a dual outlet asymmetric pump supplying high or low pressure to two independent fluidic nozzles in accordance with another embodiment of the present invention;
Fig. 8 illustrates a dual outlet asymmetric pump selectively supplying two fluidic nozzles with either high or low pressure fluid in accordance with another embodiment of the present invention;
Fig. 9 illustrates an alternative form of the system of Fig. 8;
Fig. 10 illustrates a dual outlet asymmetric pump supplying dual port fluidic nozzles in accordance with yet another embodiment of the present invention;
Fig. 11 illustrates a dual port fluidic nozzle assembly providing a high pressure pattern from a first port and a low pressure pattern from a second port;
Fig. 12 illustrates an alternative to the system of Fig. 10, utilizing a diverter valve to supply fluid to a selected port of a two port fluidic nozzle in accordance with another embodiment of the present invention;
Fig. 13 illustrates serial asymmetric pumps in a washer system in accordance with another embodiment of the present invention;
Fig. 14 illustrates two dual outlet asymmetric pumps in series supplying front and rear fluidic nozzles in a washer system in accordance with another embodiment of the invention;
Fig. 15 illustrates a dual outlet asymmetric pump supplying two pairs of nozzles in a washer system in accordance with another embodiment of the invention;
Fig. 16 illustrates a two pump system with each pump supplying dedicated boosted or static mode driver and passenger nozzles, in accordance with another embodiment of the invention; and
Fig. 17 illustrates another system having first and second dual outlet asymmetric pumps controlled separately in a system supplying dedicated boosted mode driver and passenger nozzles and static mode driver and passenger nozzles, in accordance with the present invention.

### DESCRIPTION OF THE PREFERRED EMBODIMENTS

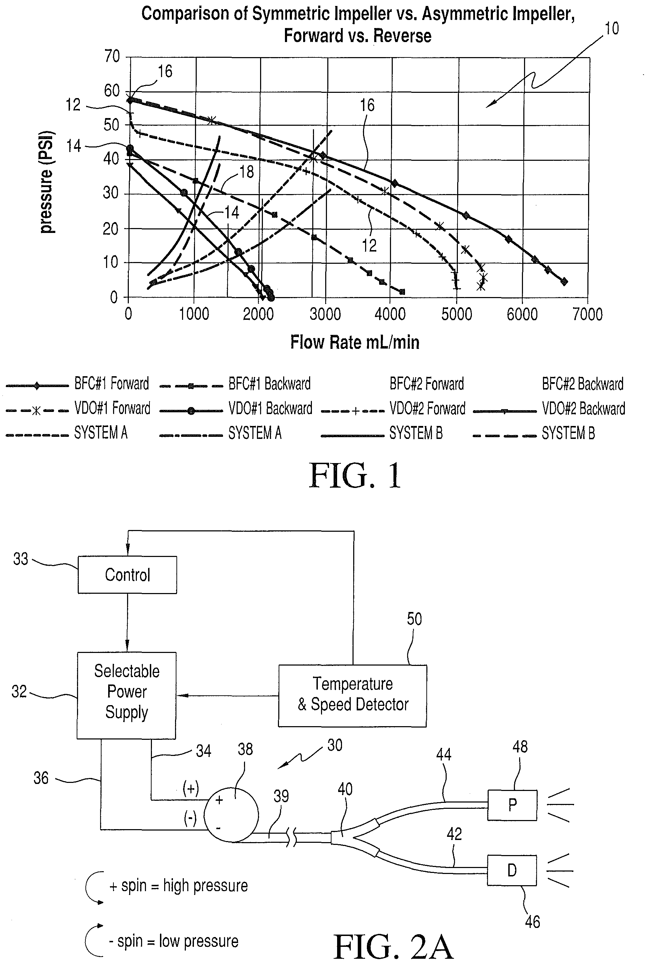

Referring now to Figs 1-17, the system and method of the present invention provides a vehicle speed or ambient temperature responsive wash system, allowing a vehicle control system to adapt the washing or cleaning system's operation to sensed operating conditions. As noted above, a highly desirable situation for a vehicle windshield washer system designer would be to have two or more separate cleaning systems on every vehicle. This would allow the designer to tailor one system to a low vehicle speed condition ("Normal") and another to a high vehicle speed condition ("Boost"). Unfortunately, this is not practical due to many reasons, including component cost, system complexity, and vehicle packaging space. This present invention is directed to a washer system with features for minimizing the problems described above in novel ways, while still achieving the dual system ideal. Each of the following embodiments or concepts are readily adapted for washer systems with hood mounted, cowl mounted or underhood mounted nozzles.

An exemplary embodiment of the present invention as illustrated in Figs 2A-2D provides a selectable low and high pressure washer system 30, attained through the utilization of a reversible impeller pump 38 which has two operational modes, a first, or forward mode which produces fluid at the pump outlet at a relatively high pressure, and a second, or reverse mode which produces fluid at the pump outlet at a relatively low pressure. As illustrated by graph 10 in Fig. 1, single outlet centrifugal pumps (e.g., 38) produce different Pressure vs. Flow curves when spun in the intended direction or in the reverse direction. This is mainly due to the location of the pumping chamber outlet relative to the vane tip and the wet cut. For the purposes of this disclosure, "pump" references and nomenclature refer to centrifugal-type pumps as typically employed in automotive washer systems.

High end symmetric (e.g., VDO) impeller pumps typically have a dead head pressure of approximately 55 PSI, as illustrated by curve 12 in Fig. 1. When spun in reverse, such pumps have a dead head pressure of 40 PSI, a reduction of performance of around 27%, as illustrated by curve 14. Flow rate reductions are not available as it is a dead head condition defined by no flow. Pressure rapidly falls off on these pumps, getting as high as 80% reduction in performance and very large losses of flow rate, as illustrated. Forward direction on these pumps can produce nearly 5500 ml/min of flow at 0 PSI, while when spun in the rearward direction they will produce just over 2100 ml/min at the same 0 PSI.

High end asymmetric impeller pumps (e.g., 38) typically have a forward spin dead head pressure of around 55 PSI, illustrated at curve 16, and a rear spin dead head pressure of 41 PSI, illustrated at curve 18, much like the symmetric impeller pump. The major difference lies in the falloff curve. Here the asymmetric impeller pump, when spinning in reverse (as illustrated at curve 16), falls off much more slowly than the symmetric impeller pump (as illustrated at curve 14). Pressure reduction percentages are only near 60%. Flow decay is even less, with a forward max flow rate of nearly 7000 mL/min and a reverse max flow rate of 4200 mL/min. An exemplary single outlet asymmetric impeller pump is illustrated in applicant's pending US application 12418357 (Gopalan et al) entitled Washer Pump, the entire disclosure of which is incorporated here by reference.

Close examination of the Pressure vs. Flow Rate curves of Fig. 1 reveal that if a high flow rate washer system is examined, the resulting estimated nozzle pressure and flow rates in the forward and reverse directions with both pump types produce the summary data illustrated in the following Table 1:

**Table 1**

| Pump Type | Condition | Nozzle Pressure Est | System Flow Est |
|---|---|---|---|
| Symmetric | Forward Spin | 23-27 PSI | 2500 - 2700 ml/min |
| | Rear Spin | 8 - 10 PSI | 1300 - 1500 ml/min |
| Asymmetric | Forward Spin | 28-30 PSI | 2700 - 3000 ml/min |
| | Rear Spin | 16 PSI | 2100 ml/min |

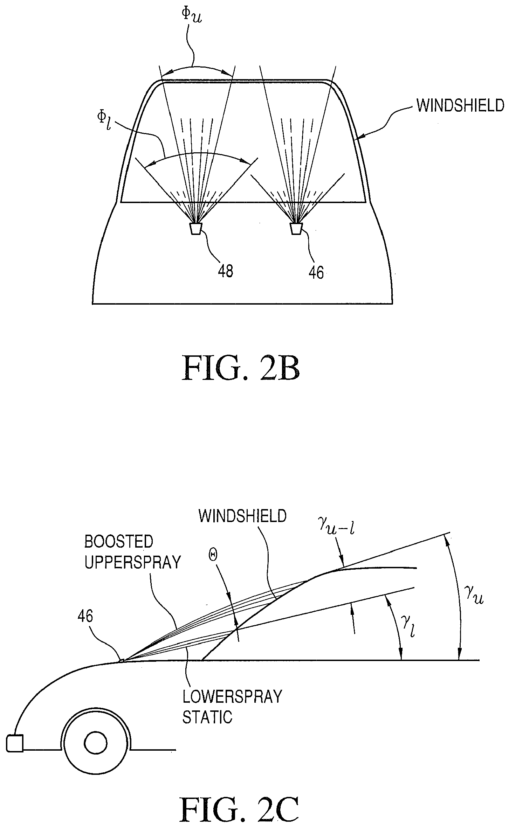

In accordance with the method and system of present invention, as illustrated at 30 in Fig. 2A, to which reference is now made, an electrical power supply system 32 that operates in response to an operator-activated washer controller 33 in a vehicle is set up to provide a Direct Current ("DC") supply voltage (e.g., 12VDC) at lines 34 and 36, for example, to a DC electric motor driven washer pump 38. The pump is responsive to selectively reversible polarity power from the vehicle electrical system 32 to provide reverse operation or forward operation of the fluid pump 38. This arrangement produces a two-mode washer pump system, in the illustrated exemplary embodiment of the present invention, which may be run in a first mode, or reverse direction, to produce a relatively lower pressure output of washer fluid in output fluid line 39. The fluid is directed through a Y-connector 40 to supply lines 42 and 44, which supply the fluid to drivers side (D) and passenger side (P) fluidic nozzles 46 and 48, respectively. The fluidic nozzles, which may be known nozzles such as those described in the above-referenced patents assigned to the assignee of the present application and incorporated by reference herein, are oriented to produce the best static coverage of the vehicle windshield (see Figs 2B and 2C), or other area to be washed, that is possible, it being understood that static coverage is the spray pattern that strikes the desired windshield area when the vehicle is substantially static or traveling at or near zero mph.

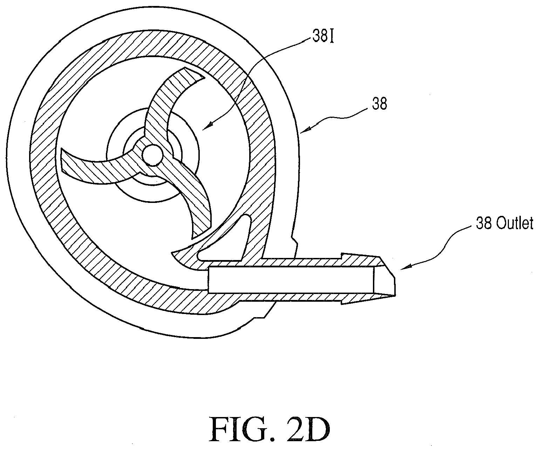

As vehicle speed increases to or near a high speed condition, the vehicle's washer controlling electronics, which includes, for example, a temperature and speed detector 50, selectively activates the power supply 32 to reverse the voltage supplied to pump 36, to switch it to its second mode, in which the pump impeller 381 rotates in the forward (counterclockwise, as shown in Fig. 2D) direction. This increases the output fluid pressure in at the pump outlet and in conduit, lumen or line 39, increasing the pressure at the nozzles 46 and 48, and gives the system spray pattern an added boost for dynamic operation conditions (see boosted upper spray, Fig. 2C). Since the control electronics 33 also respond to a signal generated by an ambient temperature sensor 50, as the vehicle's fluid temperature decreases, the electronics also selectively switch the pump 38 to its second "boost" mode, or forward direction, giving the system the added boost for cold operation conditions as well as for dynamic changes. As shown by the test data above, this can be twice as much pressure. It will be understood that the control electronics (33 and 50) measure vehicle speed and ambient temperature whenever washer fluid is called for to provide the correct spray pattern, or fan shape, for the current conditions.

It should be noted that the detailed information of Table 1 and Fig1 describe the performance of exemplary pump products and designs. Impeller and pump designs can vary, and may accentuate the above-described differences between forward and reverse impeller rotation to produce even more differentiation in fluid pumping and washer system performance. Typical impeller and volute designs are intended to maximize performance for the forward spinning "boost" condition to meet the high vehicle speed compromise, rather than optimizing pump performance in a mode-selectable way to meet the objectives of a dual mode system of the present invention.

The potential for long term washer fluid savings using the system of the present invention is significant. There is a large difference in washer fluid flow between the low pressure ("normal") and the high pressure ("boost") flow rates. The system and method of the present invention thus allows the system designer to either (a) package a smaller fluid reservoir or supply bottle (not shown), thus helping meet lower vehicle weights for CAFE reduction, while counting on a mixed ratio of "normal" to "boost" cleanings, or (b) to increase the number of cleanings per supply bottle refill, thereby increasing customer satisfaction.

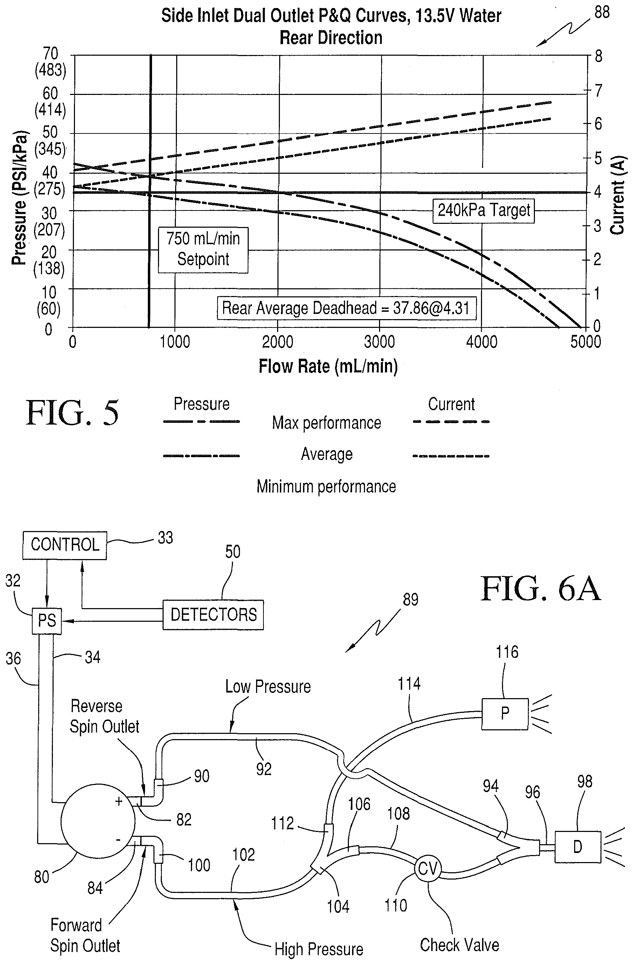

Applicant's US patents 5749525 and 7014131 are also directed to fluid washer systems for vehicles, and both of those references are incorporated herein by reference. Particular reference is made to Figs 5A and 5B of applicant's patent 7014131, which provides nomenclature for configuring and aiming fluidic-generated oscillating sprays at vehicle windshields, generally. Referring again to Figs 2B and 2C, simulation of washer fluid spray trajectory using the system 30 of the present invention shows that on an exemplary vehicle; i.e., a typical sedan with a windshield angle around 156 degrees and a hood angle of 7.2 degrees, and using a "normal" mode pressure of 16 PSI, the washer system nozzles 46, 48 are aimed at a selected aiming angle of γ_{L} of about 15 degrees to create a selected surface washer fluid impact intercept or Center Top Windshield Intercept (CTWSI) of 271mm for normal or static (lower) spray. Designating this as the best aiming configuration for the static (zero mph) condition, the resulting dynamic results, at 60 mph, provide a CTWSI of 250mm. This indicates that the spray depresses almost 21mm or nearly 1 inch under dynamic 60mph condition. If the "boost" mode is activated and the fluid is delivered to the nozzles (46, 48) at 30 PSI, the new CTWSI is predicted at 291mm. Applicants have tested prototypes and these simulation results are substantially confirmed. Washer system "boost" mode activation when static, without high airspeed, would result in a predicted 328mm CTWSI. Boost mode sprays are illustrated in Fig 2C to show the boosted upper spray aimed at a larger selected angle of γ_{U} to provide the higher CTWSI. It can be seen from this simulation and prototype testing that the additional pressure provided by the "boost" mode can positively affect the spray pattern in dynamic conditions.

Possible control strategies for wash system 30 include (a) a user operated "boost" mode, triggered by a switch in the passenger compartment or (b) allowing the vehicle's on-board control electronics to make an air-speed/temperature dependent decision as to what mode to operate in. Modern motor vehicles routinely collect much vehicle data; for example, vehicles with traction control collect wheel speed data to determine if wheel slip occurring. The same data may be used to determine if the whole vehicle is operating at a speed necessary to activate (in wash system 30) the forward spin mode, or "boost" direction of the pump to deliver the higher pressure to the system. Similarly, the vehicle collects ambient temperature data for the driver display, and again, this information may be used to control the washer system mode and control the spin direction of the washer fluid motor(s).

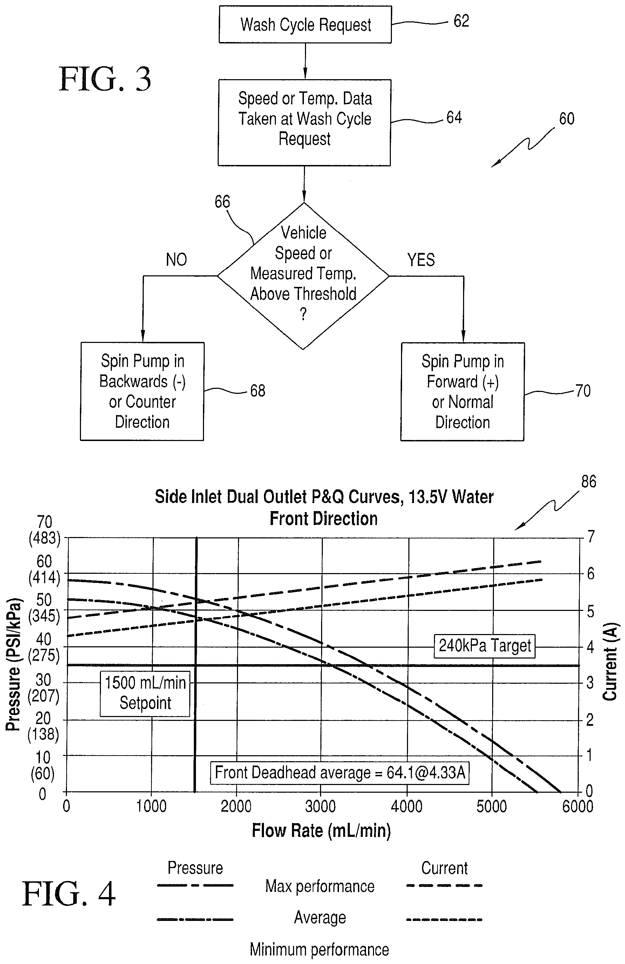

As illustrated in the exemplary control logic diagram 60 illustrated in Fig 3, a controller which can be incorporated into a selectable power supply 32 in the system of Fig. 2A, can be programmed to automatically control the washer pump mode in response to selected environmental (e.g. temperature) or vehicle operation (e.g., speed) conditions as follows. First, actuation of the washing system by control 33 is sensed, as indicated at 62, and in response the vehicle speed is sensed by detector 50, as indicated at 64. If vehicle speed (e.g., ground or air speed) is high; i.e., is above a selected threshold speed, such as 60 mph, the "boost" wash cycle (forward impeller spin, higher flow) second mode is enabled, but if vehicle speed is low; i.e., is below the selected threshold speed, then the "normal" wash cycle (reversed impeller spin, lower flow) mode is enabled, and washing fluid is conserved. At the same time, as indicated at 64, washer fluid temperature or ambient temperature is detected at detector 50, and if the sensed temperature is low; i.e., is below a selected threshold temperature such as 50°F , the "boost" wash cycle (forward impeller spin, higher flow) mode is enabled, but if the sensed temperature is high; i.e., is above a selected threshold temperature such as 50°F, then the "normal" wash cycle (reversed impeller spin, lower flow) mode is enabled, and washing fluid is conserved. Thus, if neither threshold condition is reached at decision point 66, the pump stays in its "normal " condition with a reverse spin, while if either one of the threshold conditions is reached at point 66, the polarity of the voltage is reversed and the pump is shifted to its "boost" condition, as illustrated at 70.

This, Figs 2A-3 illustrate an adaptive vehicle surface wash system 30 configured for use in a vehicle operating at selected vehicle speeds in an ambient environment, which includes a wash control system (32, 33 and 50) configured to receive a vehicle speed signal from a vehicle speed sensor (in 50), where the control system is also configured to receive a vehicle environment temperature signal from a temperature sensor (in 50), and where the wash control system is configured or programmed to generate a wash mode signal (input to 32) in response to at least one of (a) the vehicle speed signal and (b) the temperature signal to adapt the wash system's operation to sensed operating conditions. Washer fluid pump 38 has a selectable low pressure or static mode corresponding to a low pressure fluid flow and a high pressure or boost mode corresponding to a high pressure fluid flow, and selectable power supply 32 which drives and controls washer fluid pump 38 is configured to receive the wash mode signal (e.g., static or boost). Washer system 30 includes at least one washing nozzle (e.g., or two, such as 46 and 48) aimed at a selected vehicle surface (such as the windshield shown in Figs 2B and 2C, where each washing nozzle is in fluid communication with pump 38 to provide a selectable low or high pressure fluid spray output from the washing nozzle, and where the fluid spray output is aimed by the nozzle to impact the selected surface at a pre-defined impact angle selected for that washing system and that wash mode.

Adapting typical industry standard automotive assembly methods and structures for this relatively small change to the vehicle washer system's configuration is cost effective and inexpensive, so this two-mode cleaning system is very cost effective. Additional benefits are realized by the lower fluid consumption in the non-boost mode over a traditional, un-optimized or single mode washer system. Thus, the present system and method provides numerous specific benefits, such as reduced fluid consumption by ratio; that is, it provides more cleanings per bottle (customer satisfaction) or a smaller bottle package (CAFE reduction) In addition, the system produces a reduced ricochet from spray impact, an increased resistance to spray knockdown by providing fluid at a higher pressure, an optimized cleaning for both static and dynamic conditions and for warm and cold temperature conditions, and reduced overspray at static conditions.

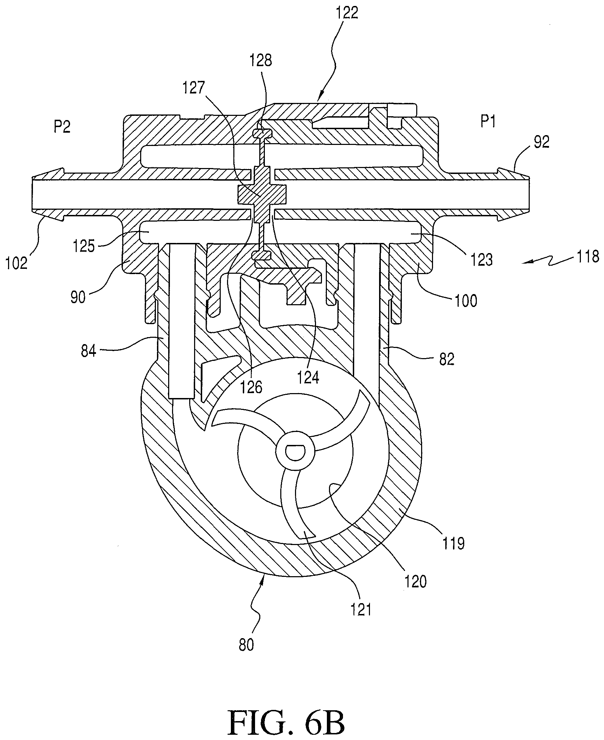

Another embodiment of the invention is illustrated in Figs. 4, 5, 6A and 6B, to which reference is now made. In this embodiment, a dual outlet pump 80 (e.g., as in Figs. 6A and 6B) with a symmetric or an asymmetric impeller design is connected to the selectable power supply 32 and to the control 33 and temperature and speed detectors 50, described above. The asymmetric dual outlet pump 80 has a unique attribute in the amount of pressure delivered in each mode of operation. Due to the chamber and impeller design, there is a significant drop in the "normal" pressure developed and delivered to the "rear" or reverse spin outlet 82 of the pump with respect to the "boost" pressure at the "front" or forward spin outlet 84 of the pump. Similar pump performance could be achieved with a symmetric pump by putting a restriction on one of the outlets of the pump to get the desired performance.

From the asymmetric pump graphs 86 and 88 in Figs. 4 and 5, respectively, it can be seen that the nominal pressure developed at the pump in the forward spin direction (Fig. 4) at 2000 ml/min would be 45PSI. The nominal pressure developed at the pump in the rear spin direction (Fig.5) at 2000 ml/min would be closer to 30 PSI. As discussed above, this kind of pressure differential is advantageous for reducing spray depression in a windshield washer system. Traditional symmetric impeller pumps tend to have nearly identical "Front" and "Rear" P&Q curves. Therefore, the asymmetric performance differences can be exploited to create a dual mode system that a system designer can capitalize on to present a number of options. As illustrated in the embodiment of Fig. 6A, a system designed in accordance with the present invention and generally indicated at 89 takes advantage of the lower pressure and flow rate developed in the reverse flow direction of an asymmetric dual outlet pump 80. In this configuration, low pressure outlet 82 from pump 80 is connected to provide fluid communication via a lumen through connector 90, fluid line 92, and connector 94 to the inlet 96 of a fluidic nozzle 98 on the driver's side of a windshield to be cleaned. In addition, a forward spin, or high pressure outlet 84 of the pump 80 is connected to provide fluid communication via a lumen through a connector 100 and through a fluid line 102 to the inlet end of a Y connector 104. One outlet 106 of connector 104 is connected through a fluid line 108 containing a backflow-preventing check valve (CV) 110 to a second inlet of Y connector 94 and thence to the driver side nozzle 98. In addition, outlet arm 112 of connector 104 is connected through fluid line 114 to the inlet of a passenger side fluidic nozzle 116. As a result, both the driver side fluidic nozzle 98 and the passenger side fluidic nozzle 116 are connected to provide a path for distal flow via a lumen to the high pressure forward spin outlet 84 of the pump.

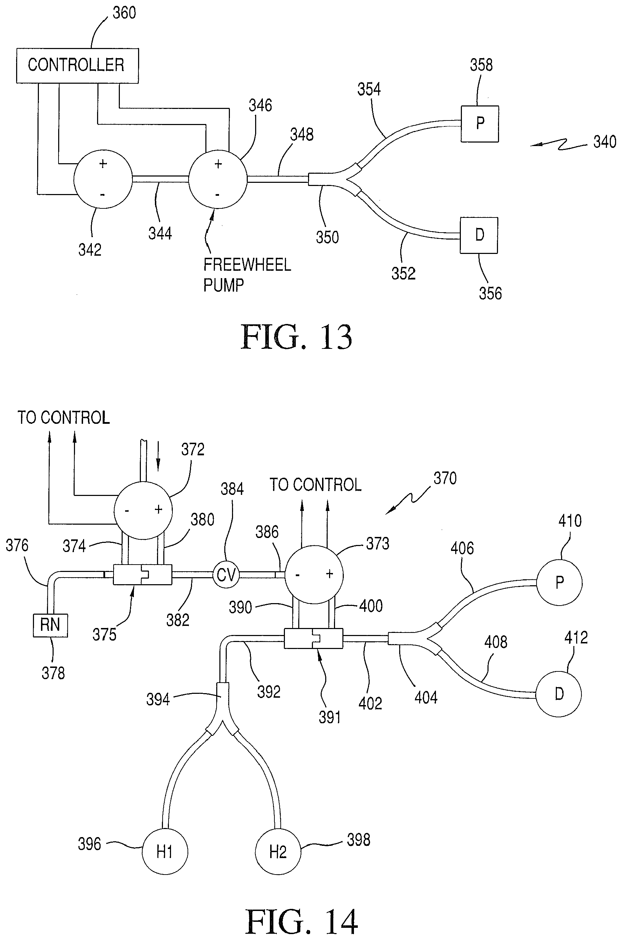

The washing system of the present invention is readily integrated into standard equipment already specified for inclusion in many automobiles and other vehicles. Vehicles configured with an existing windshield washing system ("front wash") or rear window washing system ("rear wash") require use of a washing fluid reservoir (not shown) and a pumping system to provide a supply of pressurized washing fluid. The washer tank or reservoir includes an internal pump (e.g., 38 or 80) which is activated to draw washing fluid from the reservoir and supply pressurized fluid to a conduit network (e.g., comprising lumens, tubes or hoses) which supply the windshield washing nozzles (e.g., 46, 48), and rear window washing nozzle(s) (e.g., 378, as shown in the embodiment of Fig 14). In accordance with one embodiment of the present invention, the system of the present invention actuates washing in response to driver control input (e.g., from a user input control 33) or automatically. In automatic operation, washing is initiated or triggered in response to a trigger signal. A soiled surface may optionally be detected by an image sensor (not shown) which is substantially exposed to the ambient environment and accumulated image distorting debris when the vehicle is in use, and a soiled surface detection signal may be generated for input to the washer control system, as described further below.

Possible operational modes for the system illustrated in Fig. 6A include the driver of the vehicle requesting a "normal" wash cycle, by way of the driver or user actuating a switch (not shown) in control package 33. In this case, the pump 80 operates in the reverse spin direction (corresponding to a first or static mode) and the system would only deliver cleaning fluid from low pressure outlet 82 to the driver nozzle 98 and only clean the driver's side of the windshield. If the driver found that this was unacceptable, for whatever reason, the driver would then activate the second or "boost" mode, via control package 33, and in response the pump operates in the forward spin direction, producing a high pressure output at outlet 84 to deliver high pressure fluid distally by way of fluid lines 108 and 114 to both the driver side and the passenger side nozzles 98 and 116. Analogous methodology can apply for a fully automated control system taking advantage of on-board data collection and processing. The benefits of this arrangement include reduced fluid consumption by ratio, more cleanings per bottle (customer satisfaction) or smaller bottle package (CAFE Reduction), reduced ricochet from spray impact, and reduced overspray at static condition.

A suitable two-mode pump assembly for the system of Fig. 6A is illustrated at 118 in Fig. 6B as incorporating a housing 119 having a fluid inlet 120 and an asymmetric impeller 121 driven by a reversible electric motor (not shown), in this case a 12 volt DC automotive-type motor reversible by reversing its supply voltage polarity. The impeller 121 supplies fluid at a relatively low pressure primarily to outlet 82 when spinning in its reverse (counterclockwise as viewed in Fig 6B) direction and at a relatively high pressure primarily to outlet 84 when spinning in its forward (clockwise) direction. In the illustration of Fig. 6A, the outlets 82 and 84 are shown as separate outlets connected directly to their respective fluid flow lines 92 and 102, respectively, and this correctly illustrates the operation of the system. However, it should be understood that in actual use, the impeller 121 in pump 80 will direct fluid toward both outlets 82 and 84, but at different relative pressures. To ensure that the fluid flow will be restricted to the selected outlet for a given mode of operation, a shuttle check valve 122 assembly (not shown in Fig. 6A), is connected across outlets 82 and 84. Check valve 122 includes a plenum with an annular low pressure inlet chamber 123 connected to outlet 82 and during low pressure operation, fluid flows through an annular aperture 124 to the low pressure outlet fluid line 92 shown in Fig. 6A. Similarly, the valve 122 includes an annular high pressure inlet chamber 125 connected to outlet 84 and during high pressure operation fluid flows through an annular aperture 126 to the high pressure outlet fluid line 102 shown in Fig. 6A.

Mounted in the check valve 122 between the apertures 124 and 126 and secured, for example, between the outlets 82 and 84 is a flexible membrane 127 that is suspended in the center, normally, but during operation is displaceable and movable to the left or to the right, as viewed in Fig. 6B, in response to the pressure of the fluid in chambers 123 and 125. The membrane 127 includes an annular mounting flange 128 that is secured between the outlets 90 and 100 to seal them from each other so that during low pressure or reverse spin mode operation when the pressure in chamber 123 is higher than the pressure in chamber 125, as would be the case when the impeller spins in the reverse or counterclockwise direction, the building pressure in chamber 123 pushes the membrane to the left and substantially seals aperture 126 closed. This prevents fluid flow from outlet 84 to line 102, and ensures that all of the fluid flow or output of the pump is directed to low pressure outlet line 92. Similarly, when the direction of the impeller spin is reversed the fluid pressure in outlet 84 will be higher than that in outlet 82, pushing the membrane to the right, as viewed in the Fig 6B, to close aperture 124 and allow only high pressure fluid to flow of wash fluid to outlet line 102. Thus, the membrane in the check valve 122 responds to the pressure differential produced at outlets 82 and 84 by the direction of impeller spin to regulate the output of the pump.

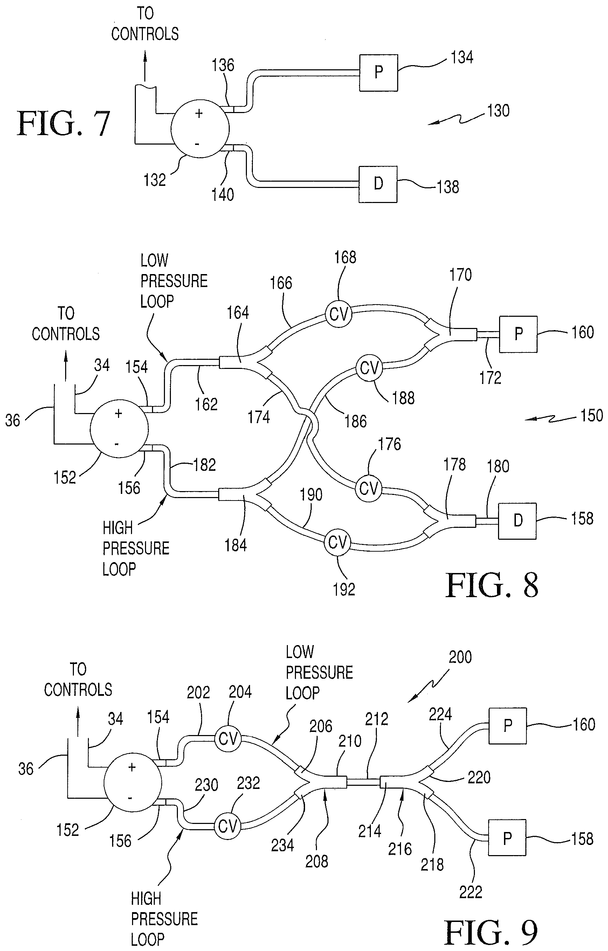

In a modification of the foregoing embodiment, illustrated at 130 in Fig. 7, a dual outlet pump 132 supplies fluid directly to two independent nozzles. In this concept, the passenger side fluidic nozzle 134 is connected to a first, low pressure output 136 of the pump, and the driver side fluidic nozzle 138 is connected to the remaining, high pressure, outlet 140. It will be understood that the pump and check valve assembly of Fig. 6B may be used at the outlets 136 and 140 of the system of Fig. 7. This system allows independent cleaning of the windshield by nozzle location selection using the control packages described above, with the driver's side nozzle receiving high pressure fluid and the passenger side nozzle receiving low pressure fluid. There are multiple variations within this concept, utilizing the unique characteristics of the symmetric dual outlet pump and the asymmetric dual outlet pump.

In accordance with another embodiment of the invention, illustrated at 150 in Fig. 8, a dual outlet asymmetric pump 152 connected to the control packages described above, supplies low ("normal") pressure to outlet 154 during reverse spin, and high ("boost") pressure to outlet 156 during forward spin. In this version, both a driver's side fluidic nozzle 158 and a passenger side fluidic nozzle 160 are connected to both the low pressure outlet 154 of the pump and the high pressure outlet 156 of the pump, preferably using the pump and check valve of Fig. 6B described above. As illustrated, reverse spin outlet 154 is connected by way of fluid line 162 and Y connector 164 to nozzle 160 by way of fluid line 166, containing check valve 168, Y connector 170 and fluid line 172. The outlet 154 is also connected to nozzle 158 by way of fluid line 162, Y connector 164, fluid line 174 containing check valve 176, Y connector 178, and nozzle inlet 180. The forward spin, high pressure outlet 156 of pump 152 is connected via high pressure fluid line 182 to Y connector 184. One output of connector 184 is connected by way of fluid line 186 containing check valve 188 via Y connector 170 to the inlet 172 of the passenger side fluidic nozzle 160, while the other output of connector 184 is connected by way of fluid line 190 containing check valve 192 to Y connector 178 to the inlet 180 of the driver side fluidic nozzle 158.

In operating the system of Fig. 8, the driver of the vehicle may request a "normal" wash using the controls described above, causing the pump 152 to spin in the "normal" direction and causing the system to deliver low pressure fluid to the low pressure output 154 and thence through the low pressure loop connected to line 162 and to both of the nozzles 158 and 160. Then, when the driver, or the detector system connected to control input connections 34 and 36 (described with respect to Fig. 2), determines that a high pressure wash is needed, the power supply 32 is activated either manually or in response to controller 33 and detector 50 to reverse the power supply voltage. This reverses the spin of the pump 152 to deliver the high pressure fluid from outlet 156 and through the high pressure loop connected to fluid line 182 to deliver the washer fluid to nozzles 158 and 160. The benefits of this system include a reduced fluid consumption by ratio, with more cleanings per bottle (customer satisfaction) or smaller bottle package (CAFE reduction), a reduced ricochet from spray impact, an optimized cleaning for both static and dynamic conditions and the analogous warm and cold temperature conditions, and a reduced overspray at static condition.

In accordance with a simplified form of the foregoing embodiment of the invention, illustrated at 200 in Fig. 9, the dual outlet asymmetric pump 152 is connected to the sensing and control components described above to supply low ("normal") pressure to outlet 154 during reverse spin, and high ("boost") pressure to outlet 156 during forward spin. Here again, the outlets 154 and 156 are preferably connected through a check valve such as the valve 122 of Fig. 6B to ensure full fluid flow to the selected output, as described above. In this version, both the driver's side fluidic nozzle 158 and the passenger side fluidic nozzle 160 are connected through check valves to both the high and the low pressure outlets 154 and 156 of the pump. The low pressure outlet 154 is connected through a fluid line 202 containing a check valve 204 to a first inlet 206 of a Y connector 208, with the outlet 210 of connector 208 being connected via fluid line 212 to the inlet 214 of a second Y connector 216. The two outlets 218 and 220 from connector 216 are connected via fluid lines 222 and 224 to driver and passenger nozzles 158 and 160, respectively, so that activation of the pump in the reverse direction will produce a "normal" spray wash output, or spray fan, from each nozzle. Similarly, the high pressure, or "boost" output from the pump is supplied through outlet 156 and fluid line 230 containing check valve 232 to a second inlet 234 on the Y connector 208, so that when the boost spin (forward) direction of the pump is selected, high pressure fluid will be supplied via connectors 208 and 216 to both of the nozzles 158 and 160. Accordingly, in the system of Fig. 9, selection of one of the "normal" or the "boost" spin directions of the pump, either manually or under the control of the speed and temperature detector, will produce the corresponding low or high pressure spray patterns from both nozzles at the same time.

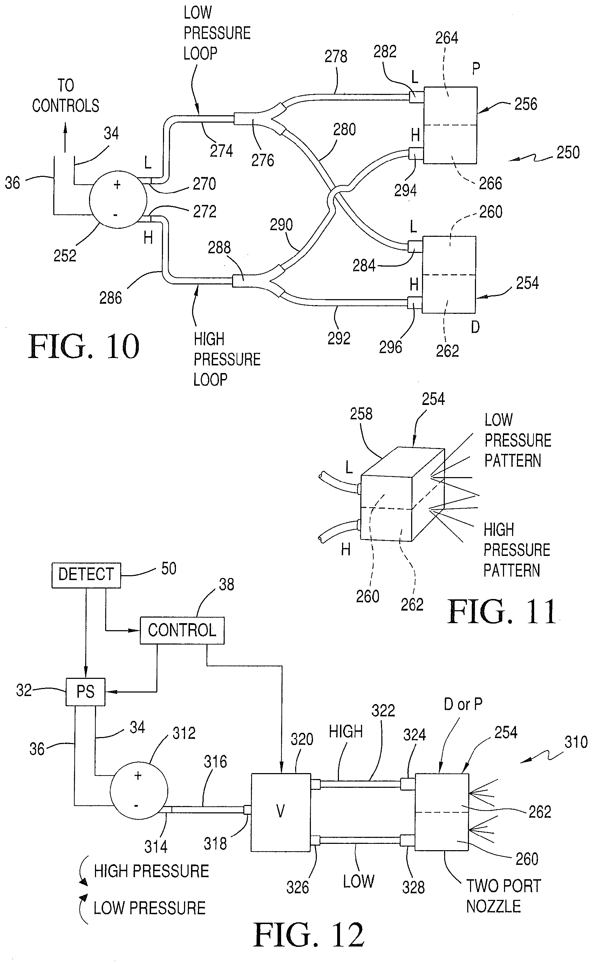

In still another embodiment of the invention, illustrated at 250 in Fig. 10, the system of the present invention incorporates a dual outlet asymmetric pump supplying low or high pressure fluid to driver side and passenger side dual inlet nozzle sets 254 and 256, respectively. As illustrated, adaptive multi-mode wash system 250 takes advantage of two nozzle sets, each having two independent inlets and two independent spray discharge outlets. As more clearly illustrated in Fig. 11, nozzle set 254 may consist of a housing 258 containing two independently configured fluidic oscillator aiming nozzles 260 and 262 of known characteristics, such as those described in the patents listed above and incorporated by reference. In an exemplary embodiment, referring again to Fig. 11, the low pressure mode nozzle spray from nozzle assembly segment 260 is configured as a mushroom-style fluidic oscillator similar to that described in applicant's US Patent 6253782 (which is incorporated herein by reference) with a uniform oscillating spray pattern, and the high pressure mode nozzle spray from nozzle assembly segment 262 is configured as a mushroom-style fluidic oscillator with a heavy-ended (non-uniform) oscillating spray pattern. More generally, one of the fluidic nozzles, such as nozzle 260, may be configured to produce a spray fan suitable for use under normal, or low speed and high temperature conditions, and positioned in the housing 254 to produce a corresponding pattern on a windshield, for example, while the other nozzle 262 may be configured and positioned in the housing to produce a boost, or high pressure spray fan to provide a corresponding pattern on the windshield. It will be understood that nozzle set 256 is similar, and incorporates two fluidic nozzles 264 and 266.

Fluid is supplied to the two nozzle sets from a dual outlet asymmetric pump 252, having a low pressure outlet 270 and a high pressure outlet 272 preferably connected through a check valve (not shown) such as the valve 122 of Fig. 6B. A first low pressure loop fluid line 274 is connected from the low pressure outlet 270 of the pump through a Y connector 276 to corresponding low pressure fluid lines 278 and 280 which are connected to inlets 282 and 284 of nozzles 264 and 260, respectively. Similarly, a second, high pressure loop fluid line 286 is connected from the high pressure outlet 272 of pump 252 through a Y connector 288 to corresponding high pressure fluid lines 290 and 292 which are connected to inlets 294 and 296 of nozzles 266 and 262, respectively.

In operation, when the driver requests a normal windshield wash, this dual pump and dual nozzle arrangement creates a spray pattern for fluid delivered by the low pressure side of the pump that results in an optimized low speed, high ambient temperature wash pattern on both the driver and the passenger side of the windshield. When the driver or detected high vehicle speed or low ambient temperature conditions request a high speed (boost) fluid supply, the increased pressure fluid is delivered by the high pressure outlet of the pump to the high pressure nozzles on both the passenger and the driver sides of the windshield. The two patterns are delivered by independent nozzles, giving the designer more options, such as creating a spray that totally overshoots the roof line in order to optimize the dynamic condition and not compromise the low speed or static conditions with unacceptable overspray. This arrangement provides a wide range of possible nozzle designs, allowing the designer to utilize any of a number of different types of fixed sprays (such as shear, bug-eye or fluidic). With a slight increase in package space over a traditional nozzle, a dual adjustable ball nozzle targeting a wide range of impact zones or spray environment conditions can be conceived.

It should be noted that an implementation similar to the embodiment of Fig. 10 can be achieved, as illustrated by washer system 310 in Fig 12, using a single outlet pump 312 having operational characteristics similar to the pump discussed above with respect to Fig. 2, with the addition of a diverter valve or solenoid valve in the fluid system. As illustrated, the single outlet 314 of the pump is connected via fluid line, or hose, 316 to a single inlet 318 of a valve 320 having a high pressure fluid outlet line 322 connected to a high pressure input 324 of a first fluidic nozzle 262 in a two port nozzle 254 such as that illustrated in Fig. 11. The valve 320 also has a low pressure fluid outlet line 326 connected to a low pressure input 328 of a second fluidic nozzle 260 for the two port nozzle 254. The valve is connected to the controller 38, described above with respect to Fig. 2, which switches the valve between its low and high pressure outputs to allow the washer system to selectively activate the two port nozzle, and which switches the single outlet pump between its forward and reverse operational characteristics. This provides tremendous flexibility in designing independent spray patterns for each of the two main vehicles conditions, high speed cold and low speed warm. And provides fluid consumption savings by applying the right amount of fluid based on the actual vehicle operating conditions at the time of activation

Still another embodiment of the invention is illustrated in Fig 13 by the washer system 340, wherein a "boost" mode of operation is achieved by a serial installation of single-outlet pumps. In this embodiment, the outlet of a first pump 342 is connected in series by way of fluid line 344 to the inlet of a second pump 344, the output of which is connected through fluid line 348 and through a Y connector 350 to fluid lines 352 and 354 which, in turn are connected to fluidic nozzles 356 and 358, respectively. Both of the pumps are connected to a controller 360 which, in the "normal" mode, activates one of the pumps, for example pump 342, while the other pump 346 is not activated in the wash cycle, but is allowed to "free wheel". In this mode, there would be a little pressure drop as the one pump was pumping thru the "free wheeling" pump, but that would be still allow the system to achieve it's target performance. When a "boost" mode is desired, as discussed above, the second pump 346 is also be activated and as a result the system would resemble a pre-stage pump and main pump, producing a significantly increased system pressure. In fact, the heads of the two pumps are roughly addable and if two identical pumps were utilized, the head would be roughly doubled.

Even more system flexibility can be achieved with a serial combination of dual outlet pumps, as illustrated at 370 in the embodiment of Fig. 14 , which includes two dual outlet pumps 372 and 373 connected in series. In this arrangement, the first pump 372 has a reverse spin low output 374 connected through a check valve 375, such as the valve 122 illustrated in Fig. 6B, and a fluid line 376 to a fluidic nozzle 378, which may be, for example, the washer nozzle for a vehicle rear window. This connection to the low pump output allows "normal" pressure cleaning with this rear nozzle. By using an asymmetric pump 372, the rear nozzle is optimized for lower flow and pressure consistent with the needs of a single nozzle spray system. As described with respect to Fig. 6B, the check valve 375 interconnects the outlets of pump 372 to ensure that the total fluid flow from the pump is directed to the output selected by the direction of spin of the pump so that only the low pressure output 374 of the first pump 372 is connected to the rear nozzle 378.

The second, or high pressure outlet 380 of pump 372 is connected through check valve 375 and a fluid line 382 containing another check valve 384 to the inlet 386 of the second pump 373. The reverse, or low outlet 390 of pump 373 is connected through a check valve 391 such as the valve 122 of Fig. 6B and through fluid line 392 and Y connector 394 to, for example, head lamp cleaning nozzles 396 and 398. The forward, or high pressure outlet 400 of pump 374 is connected through valve 391 via fluid line 402, Y connector 404 and fluid lines 406 and 408 to windshield cleaning nozzles 410 and 412, respectively. It will be noted that the serial connection of the two pumps provides a boosted output from both the low pressure and the high pressure outlets of the second pump, so that the low pressure output of the second pump is actually higher than the high pressure output of the first pump.

The controls for the two pumps allow both manual selection of the pumps and manual and automatic control of the pressure in accordance with speed and temperature, as described above, to provide the following operation:
1. Rear nozzle cleaning: Pump 372 selected to run in reverse spin mode, low pressure fluid is supplied through valve 375 to supply fluid at "normal" pressure to rear nozzle 378; flow to outlet line 382 is checked by valve 375.
2. "Normal" windshield (front nozzle) cleaning: Pump 372 is controlled to run in forward spin mode and valve 375 is switched so that high pressure fluid is supplied from pump 372 through the valve to outlet line 382 and then to pump 373. This second pump is controlled to operate in a freewheeling condition to supply a "normal" pressure to outlet 400, and valve 391 directs this flow toward fluid line 402 to provide a "normal" wash flow to windshield nozzles 410 and 412.
3. "Boost" windshield (front nozzle) cleaning: Pump 372 is controlled to run in its forward (high pressure) direction, valve 375 switches to prevent flow from the high pressure outlet to rear nozzle 378, but instead directs the fluid from outlet 380 to the inlet 386 of pump 373 so that pump 372 acts like a pre-stage pump. Pump 373 is activated in its forward or high pressure direction, "boosting" the pressure at outlet 400, which is then supplied to nozzles 410 and 412 in the windshield cleaning scenario.
4. Head lamp cleaning: Pump 372 is set to run in its forward direction, valve 375 directs the output to line 382 and thence to the inlet of pump 373, so that the first pump acts like a pre-stage pump. Pump 373 is activated in its reverse spin direction, the two-stage pump providing a "boosted" low, or "normal" pressure in head lamp cleaning scenario. Only this "boost" mode is available for the headlights.

For each of the embodiments described above and illustrated in Figs 2, 6, 7, 8, 9, 10, 12, 13, 14 and 15-17 the washer system spray nozzles preferably generate either a "bug-eye" style jet spray or an oscillating spray pattern of uniformly distributed fluid from fluidic circuits or fluidic oscillators such as those described in the following commonly owned US patents 5749525, 5906317, 6457658, 7014131, 7472848 and 775456, as previously described.

Optionally, the washer controller (e.g., including control 38, detectors 50 and controller power supply 32) may be configured and programmed to respond automatically to a surface condition detection signal. A "soiled surface" detection signal is generated by a soiled surface detector (e.g., incorporated in detectors 50) and that signal used in the method of the present invention as an alternative triggering signal to actuate the washer system in a selected mode. For example, detectors 50 may optionally include a soiled windshield surface detector which generates the soiled surface detection signal, and the washer controller may be programmed to automatically generate a static mode wash signal of selected duration when the vehicle is travelling below a selected speed (e.g., 60 mph) and generate a boosted mode wash signal when the vehicle is travelling above the selected speed.

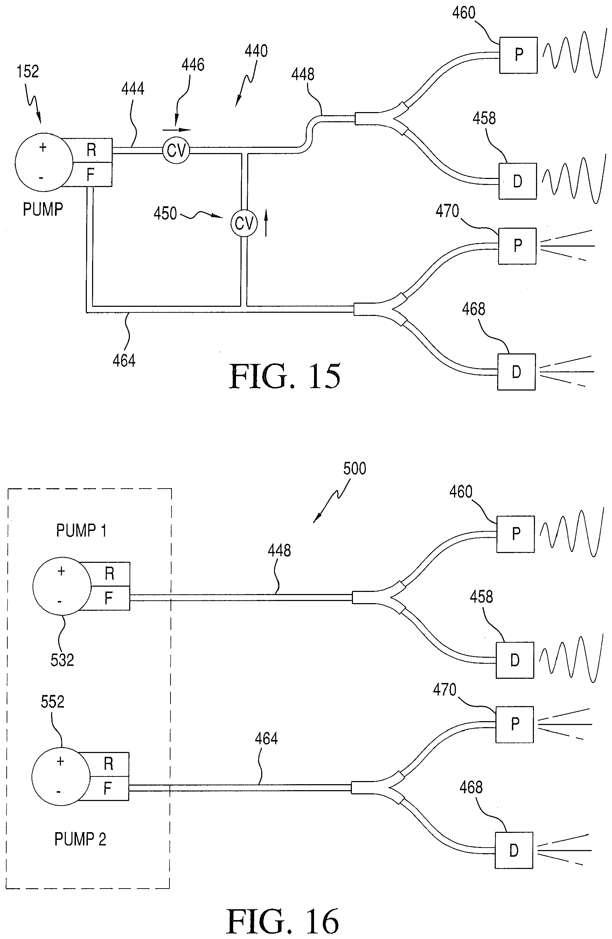

Turning now to the embodiments illustrated in Figs 15-18 and referring again to the vehicle windshield cleaning sprays shown in Figs 2B and 2C, optimal cleaning of the windshield at a static airspeed (e.g., 0 mph) condition relies on a gentle, full coverage spray to effect cleaning over the majority of the wipe pattern, from the toe to the heel of the wipe pattern. This can be accomplished with either single or double fan spray nozzles that target and concentrate fluid in the appropriate regions of the windshield, working in concert with the wipers to complete the coverage and cleaning action. It is desirable to keep the spray localized to the glass, particularly the wipe zone, with excellent coverage provided to what is known as the "C" zone of the glass. It is highly un-desirable to have any fluid over-spray the left and right framing "A" pillars or roof line of the vehicle. Less comprehensive spray patterns can be achieved with shear type nozzles or bug-eye type nozzles. This optimal condition is compromised as the temperature goes down or the vehicle speed, otherwise known as the air speed, increases. With decreasing temperature, the fluids used to clean the windshield become more viscous, and as a result the pressure delivered to the nozzle, which ejects the fluid at the windshield, goes down. For example at 0C Methanol in a 50/50 concentration has a viscosity of 7 cP (0 at RT) and Ethanol mixed at 50/50 concentration has a viscosity of nearly 27 cP. Many nozzle technologies exist; bug eye, spoon/shear and fluidic and none of them can fully compensate for the loss of velocity that is a result of loss of pressure. This loss of pressure and analogous velocity can result in sprays that sag under the influence of gravity and hit lower on the windshield than as designed for the room temperature situation. Additionally, the pressure required to maintain the fan goes up as temperature goes down, and the system designer is forced to specify a higher nozzle pressure at room temperature than is optimally desired to assure adequate performance at the cold temperatures. A highly effective washer system includes two or more separate cleaning systems. This allows the designer of a particular vehicle to tailor one system to the low vehicle speed condition ("Normal") and another to the high vehicle speed condition ("Boost"). The washer systems of Figs 15-17 provide dual washer system levels of performance, but at an economical cost, and can be configured for use with Hood Mounted, Cowl mounted or underhood mounted nozzles.

Fig. 15 shows a washer system 440 with a dual outlet asymmetric pump 152 which is activated to draw washing fluid from a reservoir (not shown) and supply pressurized washer fluid to a conduit network (e.g., comprising lumens, tubes or hoses) which supply selected nozzles. When Pump 152 is operating in static or reverse mode, washing fluid flows through fluid line 444 and check valve 446 and then through fluid line 448, but cannot flow through check valve 450, thus the normal or static mode spray flows only through nozzles 458, 460, which aim normal mode sprays at the windshield or other surface to be cleaned. Conversely, when Pump 152 is operating in boosted or forward mode, hi pressure washing fluid flows through fluid line 464 and check valve then check valve 450 and through fluid line 448, and through nozzles 458, 460. Washing fluid also flows through nozzles 468, 470 which then aim boosted mode spray at the windshield or other surface to be cleaned. At low vehicle speeds, pump 152 is run in Reverse mode to generate low pressure flow running only nozzles 458, 460, which preferably generate an oscillating spray from fluidic oscillators incorporated therein. Spray aim is optimized for low speed or static conditions which are optimum for vehicle speeds up to about 50mph. Check valve 446 is open in the low pressure (mode 1) flow direction while the second check valve 450 is closed to the low pressure flow. At higher vehicle speeds (e.g., above 50 mph), pump 152 is actuated to generate boosted, high pressure flow for boosted mode operation and generates hi pressure flow through nozzles 468, 470 which may be jets or bug-eye sprays aimed higher on the windshield for higher speed operation thus maximizing high speed washing performance, where part of the flow flows through check valve 450 and fluidic nozzles 458, 460.

Fig. 16 illustrates a two pump system 500 with each pump 532, 552 being configured to draw washing fluid from a reservoir (not shown) and supply pressurized washer fluid to a conduit network (e.g., comprising lumens, tubes or hoses) which supply selected nozzles458, 460, 688, 470. When first pump 532 is operating in static or reverse mode, washing fluid flows through fluid line 448 the normal or static mode spray flows only through nozzles 458, 460, which aim normal mode sprays at the windshield or other surface to be cleaned. When first pump 532 is operating in boosted or forward mode, hi pressure washing fluid flows through fluid line 448 and through nozzles 458, 460 which then aim boosted mode spray at the windshield or other surface to be cleaned. When second pump 552 is operating, high pressure washing fluid flows through fluid line 464 and flows only through nozzles 468 and 470, which then aim boosted mode (preferably jet) sprays at the windshield or other surface to be cleaned. In system 500, the two pumps 532, 552 are deployed with dedicated sets of nozzles, where nozzles 458, 460 are preferably fluidic oscillator nozzles aiming oscillating sprays at the windshield and the second set of nozzles 468, 470 are bug-eye type nozzles configured to generate and aim a jet spray at the windshield which are aimed higher and targeted for high speed washing performance.

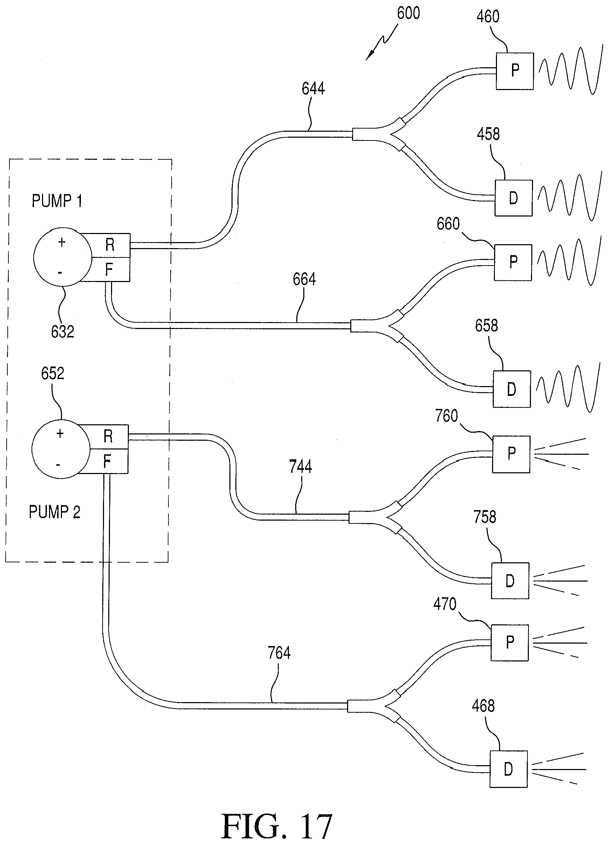

Fig. 17 illustrates a washer system 600 having first and second dual outlet asymmetric pumps 632, 652 controlled separately in a system supplying dedicated boosted mode driver and passenger nozzles and static mode driver and passenger nozzles. First pump 632 is configured to draw washing fluid from a reservoir (not shown) and supply pressurized washer fluid to a conduit network (e.g., comprising lumens, tubes or hoses) which supply selected nozzles458, 460, 658, 660. When pump 632 is operating in static or reverse mode, washing fluid flows through fluid line 644 and the normal or static mode spray flows only through nozzles 458, 460, which aim normal mode sprays at the windshield or other surface to be cleaned. Conversely, when Pump 632 is operating in boosted or forward mode, hi pressure washing fluid flows through fluid line 664 and only through nozzles 658, 660 which then aim boosted mode spray at the windshield or other surface to be cleaned. At low vehicle speeds, pump 632 is run in Reverse mode to generate low pressure flow running only nozzles 458, 460, which preferably generate an oscillating spray from fluidic oscillators incorporated therein. Spray aim is optimized for low speed or static conditions which are optimum for vehicle speeds up to about 50 mph. At higher vehicle speeds (e.g., above 50 mph), pump 632 is actuated to generate boosted, high pressure flow for boosted mode operation and generates hi pressure flow through nozzles 658, 660 which are preferably oscillating sprays aimed higher on the windshield for higher speed operation thus maximizing high speed washing performance. In washer system 600, second pump 652 is configured to draw washing fluid from the reservoir and supply pressurized washer fluid to a conduit network (e.g., comprising lumens, tubes or hoses) which supply selected bug-eye nozzles 468, 470, 758, 760. When pump 652 is operating in static or reverse mode, washing fluid flows through fluid line 744 and the normal or static mode spray flows only through nozzles 758, 760, which aim normal mode jet sprays at the windshield or other surface to be cleaned.

Conversely, when Pump 652 is operating in boosted or forward mode, hi pressure washing fluid flows through fluid line 764 and only through nozzles 468, 470 which then aim boosted mode jet sprays at the windshield or other surface to be cleaned. At low vehicle speeds, pump 652 is run in Reverse mode to generate low pressure flow running only nozzles 758, 760, which preferably aim and generate a jet spray optimized for low speed or static conditions which are optimum for vehicle speeds up to about 50 mph. At higher vehicle speeds (e.g., above 50 mph), pump 652 is actuated to generate boosted, high pressure flow for boosted mode operation and generates hi pressure flow through nozzles 468, 470 which are aimed higher on the windshield for higher speed operation thus maximizing high speed washing performance. With both pumps operating, a large burst of fluid is dumped on the windshield for a short selected spray burst interval (e.g., 0.5-0.7 seconds), preferably with windshield wipers starting a wiping motion across the surface to be cleaned at a selected moment near the end of the fluid burst interval, such that the windshield may be cleaned in one cycle of windshield wiper operation in under one second. At higher speed (e.g., over a selected mode-change speed of 50 mph), both pumps 632, 652 go into forward or boosted mode and deliver a substantial quantity of washing fluid through the boost mode nozzles 468, 470, 658, 660 aimed up for higher speed or boosted performance to compensate for spray depression from air passing over the vehicle.

It will be appreciated by those of skill in the art that while the washer system of the present invention has been described as having nozzle assemblies aimed from positions on the hood corresponding to "driver" and "passenger" positions (e.g., 46, 48, as shown in Fig. 2B), the nozzle assemblies can be arrayed laterally (e.g., across the hood) with three or more nozzle placement positions, and applicants have found that prototypes of washer systems with a third, centered nozzle assembly (e.g., such as 254) are suitable for certain vehicles.

The foregoing embodiments are illustrative of the various ways that reversible asymmetric and symmetric pumps may be combined with traditional (i.e., jet spray) or fluidic (i.e., oscillating spray) nozzles in vehicle washer systems, and additional configurations will be apparent to those of skill in the art. For example, a system designer could chose to package a low performance pump and a high performance pump to replace the dual outlet asymmetrical pump described herein, although this option might be significantly more expensive. The important aspect of the present invention is that the system is configured and controlled or programmed to operate in different modes, minimizing the compromises inherent in prior art systems using single pump supply pressure or single nozzle design constraints. Accordingly, having described preferred embodiments of a new and improved system and method for configuring and controlling windshield washer fluid spray systems and the like, it is believed that other modifications, variations and changes will be suggested to those skilled in the art in view of the teachings set forth herein. It is therefore to be understood that all such variations, modifications and changes are believed to fall within the scope of the present invention as set forth in the following claims.

## Claims

1. An adaptive vehicle surface wash system configured for use in a vehicle operating at selected vehicle speeds in an ambient environment, comprising:
a wash control system configured to respond to a user's wash system actuation input and to receive a vehicle speed signal from a vehicle speed sensor (50), said control system also being configured to receive a vehicle environment temperature signal from a temperature sensor (50), wherein said wash control system is configured or programmed to generate a wash mode signal in response to at least one of said vehicle speed signal and said temperature signal to adapt the wash system's operation to sensed operating conditions;
a washer fluid pump (38, 80, 132, 152, 252, 312, 342, 344, 372, 373, 374, 532, 552, 632, 652) having selectable low pressure mode corresponding to a low pressure fluid flow and a high pressure mode corresponding to a high pressure fluid flow, and wherein said washer fluid pump (38, 80, 132, 152, 252, 312, 342, 344, is configured to receive said wash mode signal; and 372, 373, 374, 532, 552, 632, 652)
at least one washing nozzle (46, 48, 98, 116, 134, 138, 158, 160, 260, 264,356, 358, 378, 396, 398, 458, 460, 468, 470, 658, 660, 758, 760) aimed at a selected vehicle surface, said washing nozzle (46, 48, 98, 116, 134, 138, 158, 160, 260, 264,356, 358, 378, 396, 398, 458, 460, 468, 470, 658, 660, 758, 760)being in fluid communication with said pump (38, 80, 132, 152, 252, 312, 342, 344, 372, 373, 374, 532, 552, 632, 652) to provide a selectable low or high pressure fluid spray output from said washing nozzle (46, 48, 98, 116, 134, 138, 158, 160, 260, 264,356, 358, 378, 396, 398, 458, 460, 468, 470, 658, 660, 758, 760), wherein said fluid spray output is aimed by said nozzle (46, 48, 98, 116, 134, 138, 158, 160, 260, 264,356, 358, 378, 396, 398, 458, 460, 468, 470, 658, 660, 758, 760) to impact said selected surface at a pre-defined impact angle selected for said wash mode signal; and
wherein said washer fluid pump (38, 80, 132, 152, 252, 312, 342, 344, 372, 373, 374, 532, 552, 632, 652) comprises an asymmetric dual-outlet pump assembly having an impeller driven by a D.C. motor having first (+) and second (-) electrical terminals configured such said that when a first, forward- spin polarity corresponds to said high pressure mode and a second, reverse-spin polarity is reversed from said first polarity and corresponds to said low pressure mode.

2. The adaptive vehicle surface wash system of claim 1, wherein said washer fluid pump dual-outlet pump assembly further comprises a plenum in fluid communication with said dual-outlet pump at a high pressure outlet and a low pressure outlet, said plenum including a suspended shuttle valve member configured to respond to pressure at said high pressure outlet and substantially seal off flow through said low pressure outlet when said pump is energized with said first, forward-spin polarity corresponding to said high pressure mode.

3. The adaptive vehicle surface wash system of claim 2, wherein said suspended shuttle valve member is also configured to respond to pressure at said low pressure outlet and substantially seal off flow through said high pressure outlet when said pump is energized with said second, reverse-spin polarity corresponding to said low pressure mode.

4. The adaptive vehicle surface wash system of claim 1, wherein said washing nozzle (46, 48, 98, 116, 134, 138, 158, 160, 260, 264,356, 358, 378, 396, 398, 458, 460, 468, 470, 658, 660, 758, 760) has a first outlet aimed at said selected vehicle surface at a first spray aiming angle.

5. The adaptive vehicle surface wash system of claim 4, wherein said washing nozzle (46, 48, 98, 116, 134, 138, 158, 160, 260, 264,356, 358, 378, 396, 398, 458, 460, 468, 470, 658, 660, 758, 760) includes a second outlet aimed at said selected vehicle surface at a second spray aiming angle which is greater than said first spray aiming angle.

6. The adaptive vehicle surface wash system of claim 1, wherein said washing nozzle (46, 48, 98, 116, 134, 138, 158, 160, 260, 264,356, 358, 378, 396, 398, 458, 460, 468, 470, 658, 660, 758, 760) includes at least a first fluidic oscillator having said first nozzle outlet aimed at said selected vehicle surface at said first spray aiming angle, and wherein said washing nozzle includes a second fluidic oscillator having said second outlet aimed at said selected vehicle surface at said second spray aiming angle.

7. The adaptive vehicle surface wash system of claim 1, wherein said wash control system configured is programmed to either respond to a user's wash system actuation input or to respond to an automatically generated wash system actuation input;
wherein said automatically generated wash system actuation input is generated in response to a or surface-condition signal generated by a surface condition detector and said wash control system is configured or programmed to generate said wash mode signal automatically in response to at least one of said vehicle speed signal and said temperature signal to adapt the wash system's operation to sensed operating conditions.

8. The adaptive vehicle surface wash system of claim 1, wherein said pump (38, 80, 132, 152, 252, 312, 342, 344, 372, 373, 374, 532, 552, 632, 652) is a dual outlet pump having a first low pressure outlet and a second high pressure outlet, and further including a check valve connected to said first and second outlets and responsive to the pressure produced by said reversible impeller (121, 381) to produce a fluid flow at only the selected high or low pressure fluid outlet from said pump.

9. The adaptive vehicle surface wash system of claim 8, further including a second dual outlet pump connected in series with one outlet of the first pump, said pumps being individually controllable for freewheeling, forward or reverse operation.
